# EUROPÄISCHE PATENTSCHRIFT

(11) **EP 1 110 717 B1**
(45) Veröffentlichungstag und Bekanntmachung des Hinweises auf die Patenterteilung: **01.06.2005**
(21) Anmeldenummer: 00126668.3
(22) Anmeldetag: 05.12.2000
(51) Int. Cl.: B32B 31/08, B32B 31/28

(54) **Verfahren und Vorrichtung zum Herstellen eines zumindest eine Polymerfolie mit Informationen und zumindest eine Trägerschicht enthaltenden Verbundes zur Weiterverarbeitung für fälschungssichere Dokumente**
Method and apparatus for producing a laminate comprising at least a polymer film with informations and a carrier layer used for making secure documents
Procédé et dispositif pour la fabrication d'un laminé comprenant au moins un film polymère portant des informations et une couche support, utilisé pour produire des documents infalsifiables

(30) Priorität: 22.12.1999 DE 19962413
(43) Veröffentlichungstag der Anmeldung: 27.06.2001
(73) Patentinhaber: Bundesdruckerei GmbH, 10969 Berlin (DE)
(72) Erfinder: Kiener, Waldemar, 73466 Lauchheim (DE); Rein, Johann, 73441 Bopfingen (DE); Hoeppner, Harald, 12309 Berlin (DE); Löer, Thomas, 10961 Berlin (DE); Märtens, Detlef, 13599 Berlin (DE); Radtke, Michael, 12489 Berlin (DE); Sengstock, Norbert, 12355 Berlin (DE); Dörner, Wolfgang, 10713 Berlin (DE); Stiemert, Peter, 10787 Berlin (DE)
(74) Vertreter: Maser, Jochen, Dipl.-Ing.

(56) Entgegenhaltungen:
- EP-A- 0 949 546
- DE-A- 2 952 322

## Beschreibung

Die Erfindung betrifft ein Verfahren und eine Vorrichtung zum Herstellen eines zumindest eine Polymerfolie mit Informationen und zumindest eine Trägerschicht enthaltenden Verbundes zur Weiterverarbeitung für fälschungssichere Dokumente.

Aus der DE 29 52 322 ist ein Verfahren zur Herstellung fälschungssicherer Dokumente, wie beispielsweise ein Personalausweis, bekannt geworden. Ein Informationsträger aus Papier wird beidseitig mit Folien laminiert, wobei die Folien jeweils mit einer Haftschicht versehen sind, die aus einer strahlhärtbaren Masse besteht und derart auf dem Informationsträger auflaminiert wird, daß die Schichten mit dem Informationsträger in Kontakt kommen und das Laminat einer vernetzungsaktiven Strahlung ausgesetzt wird. Zum Auflaminieren der die strahlhärtbare Masse tragenden Folie auf die Oberfläche des Informationsträgers wird die Folie bis auf 150° C erwärmt. Gleichzeitig wird die Folie gegen die Oberfläche des Informationsträgers gedrückt. Die einmal auf den Informationsträger auflaminierte Folie läßt sich ohne völlige Zerstörung des Informationsträgers nicht mehr entfernen.

Die Anforderungen an die Herstellung und Bereitstellung von fälschungssicheren Dokumenten ist stark angestiegen. Der Einsatz von Polymerfolien mit Informationen, wie beispielsweise Hologrammen oder dergleichen, wird mehr und mehr gefordert. Durch die zusätzliche Verwendung von Polymerfolien mit Informationen für beispielsweise aus der DE 29 52 322 bekannte fälschungssichere Dokumente kann der Aufwand und der Schwierigkeitsgrad zur Fälschung derartiger Dokumente wesentlich erhöht sein.

Die Polymerfolie mit Informationen, wie beispielsweise Hologramme, sind äußerst dünne und empfindliche Filme, welche nach deren Herstellung beidseitig mit einer Schutzfolie oder Stützfolie versehen sind. Beispielsweise geht die Herstellung einer derartigen Polymerfolie aus der EP 0 726 142 A3 hervor.

Zur Weiterverarbeitung eines derartigen Verbundes, bestehend aus einer Polymerfolie, welche beidseitig eine Stützfolie aufweist, ist es erforderlich, daß die Stützfolien von der Polymerfolie abgezogen werden, wobei anschließend die Polymerfolie auf Trägerschichten aufzubringen ist, damit diese beispielsweise in fälschungssicheren Dokumenten gemäß der DE 29 52 322 weiterverarbeitet werden können. Die die Polymerfolie umgebenden Stützfolien sind aus Polyesterfolien oder Polyethylenterephtalatfolien oder dergleichen hergestellt, die einerseits sehr dünn und andererseits transparent, vorzugsweise glasklar, ausgebildet sind, damit mittels Laser das Hologramm oder andere Informationen auf den Polymerfilm aufgebracht werden können. Derartige Stützfolien eignen sich jedoch nicht für die Weiterverarbeitung in fälschungssicheren Dokumenten. Diese Folien weisen einen zu hohen Sthmelzpunkt für die Weiterverarbeitung auf, wodurch eine Beeinträchtigung der die Informationen tragenden Polymerfolie gegeben wäre. Des weiteren ist der apparative Aufwand zur Weiterverarbeitung von Folien mit hoher Temperatur aufwendig.

Aus der EP-A-949546 ist ein Verfahren zum Herstellen eines eine Polymerfolie mit Informationen und zwei äussere Schichten enthaltenden Verbundes (10) zur Weiterverarbeitung für Dokumente bekannt geworden, wobei ein Film bestehend aus einer Polymerfolie mit beidseitig angeordneten Folien einer ersten Bearbeitungsstation zugeführt wird, wobei in der ersten Bearbeitungsstation auf einer ersten Seite der Polymerfolie eine Folie delaminiert wird, nachfolgend eine Silikonschicht mit einem Klebemittel auflaminiert wird. Das aus der ersten Bearbeitungsstation herausgeführte Laminat wird einer zweiten Bearbeitungsstation zugeführt, wobei auf der zweiten Seite des Laminats die zweite Folie delaminiert wird, nachfolgend eine Scfiutzschicht mit einem Klebemittel auflaminiert wird.

Der Erfindung liegt deshalb die Aufgabe zugrunde, ein Verfahren und eine Vorrichtung zur Herstellung eines zumindest eine Polymerfolie mit Informationen und zumindest eine Trägerschicht enthaltenden Verbundes zur Weiterverarbeitung für fälschungssichere Dokumenten zu schaffen, bei der in einer kontinuierlichen Arbeitsweise die Stützfolien der Polymerfolien durch Trägerschichten ersetzt werden, so daß ein neuer Verbund geschaffen wird, der zur Weiterverarbeitung für fälschungssichere Dokumente geeignet ist.

Diese Aufgabe wird erfindungsgemäß durch das Verfahren gemäß den Ansprüchen 1 oder 2 und die Vorrichtung gemäß dem Ansprüchen 13 oder 14 gelöst.

Durch die Hintereinanderschaltung von zumindest einer ersten und einer zweiten Bearbeitungsstation kann ein Inlineverfahren geschaffen werden, bei dem zumindest eine Stützfolie der Polymerfolie auf einer Seite durch zumindest eine Trägerschicht in einer ersten Bearbeitungsstation ersetzt, und in einer zweiten Bearbeitungsstation auf der gegenüberliegenden Seite der Polymerfolie eine Stützfolie durch zumindest eine Trägerschicht ersetzt wird, wobei die Polymerfolie kontinuierlich durch die erste und zweite Bearbeitungsstation gefördert wird. Durch den Austausch der Stützfolien durch Trägerschichten kann ein Verbund einer Polymerfolie mit beidseitig angeordneten Trägerschichten hergestellt werden, der für die Weiterverarbeitung für fälschungssichere Dokumente eingesetzt werden kann.

Der fließende Austausch der Stützfolie durch die Trägerschicht in einer ersten Bearbeitungsstation erfolgt dadurch, daß zunächst die Stützfolie delaminiert wird, anschließend die Trägerschicht mit einem Klebemittel auf die Polymerfolie laminiert und nachfolgend zur Vernetzung einer UV-Strahlung ausgesetzt wird, so daß eine UV-aushärtbare Klebeverbindung zwischen der Polymerfolie und der Trägerschicht geschaffen wird. Dieses Laminat, bestehend aus Stützfolie, Polymerfolie und Trägerschicht, wird vorzugsweise unmittelbar einer zweiten Bearbeitungsstation zugeführt, um die Stützfolie zu delaminieren, anschließend zumindest eine Trägerschicht mit einem Klebemittel zu laminieren, wobei die Trägerschicht nachfolgend einer vernetzungsaktiven UV-Strahlung wiederum ausgesetzt wird. Anschließend kann ein zur Weiterverarbeitung geeigneter Verbund, bestehend aus einer Polymerfolie, vorzugsweise mit Hologrammen, und beidseitig mit zumindest einer Trägerschicht aus der zweiten Bearbeitungsstation herausgeführt werden.

Nach einer vorteilhaften Ausgestaltung der Erfindung ist vorgesehen, daß nach der zweiten Bearbeitungsstation der Verbund auf einer Aufwickelrolle aufgewickelt oder in einem nachfolgenden Arbeitsschritt weiterverarbeitet wird. Insbesondere bei der Weiterverarbeitung beziehungsweise Vorschaltung des erfindungsgemäßen Umpackverfahrens zur Weiterverarbeitung der Folie kann eine rationelle Herstellung von fälschungssicheren Dokumenten vorgesehen sein. Der durch das Verfahren hergestellte Triplexverbund aus einer Polymerfolie mit beidseitig angeordneten Trägerschichten kann beispielsweise auf einen Informationsträger aufgebracht werden, der zur Herstellung von fälschungssicheren Dokumenten nach einem Verfahren gemäß der DE 29 52 322 verwendet wird.

Nach einer weiteren vorteilhaften Ausgestaltung der Erfindung ist vorgesehen, daß ein die Polymerfolie enthaltender Film, vorzugsweise aus drei Lagen bestehend, von zumindest einer Vorratsrolle abgezogen wird. Dadurch kann das Verfahren autark eingesetzt werden, insbesondere dann, wenn am Ende des Verfahrens der hergestellte Verbund von einer Aufwickelrolle aufgenommen wird. Altemativ kann das erfindungsgemäße Verfahren auch in einen kontinuierlichen Prozeß eingebunden sein. Der die Polymerfolie enthaltende Film kann durch eine diesem Verfahren vorgeschaltene Bearbeitungsstation bereitgestellt und kontinuierlich zugeführt werden.

Nach zumindest einer weiteren vorteilhaften Ausgestaltung der Erfindung ist vorgesehen, daß die zumindest erste und zweite Bearbeitungsstation jeweils eine zentrale Walze aufweisen, an deren Außenumfang zumindest eine Delaminiervorrichtung, eine Laminiervorrichtung und eine Aushärtevorrichtung positioniert wird. Dadurch kann erzielt werden, daß die Trägerschicht spannungsfrei auf die Polymerfolie und Stützfolie in der ersten Bearbeitungsstation und auf die Polymerfolie und Trägerschicht in der zweiten Bearbeitungsstation aufgebracht wird. Des weiteren kann dadurch eine bauraumsparende Anordnung geschaffen werden. Des weiteren ist vorteilhafterweise vorgesehen, daß die Delaminiervorrichtung und Laminiervorrichtung unmittelbar aufeinanderfolgend positioniert sind, so daß die Verschmutzungsgefahr der freien Oberfläche der Polymerfolie zwischen der Delaminiervorrichtung und der Laminiervorrichtung gering gehalten wird. Darüber hinaus kann sich dadurch die Aushärtevorrichtung über ein größeres Kreissegment entlang der Walze erstrecken, wodurch vorteilhafterweise erzielt wird, daß zumindest vor Erreichen der zweiten Bearbeitungsstation beziehungsweise vor der Aufwicklung oder Weiterverarbeitung nach der zweiten Bearbeitungsstation eine unlösbare Verbindung zwischen der auflaminierten Trägerschicht und der Polymerfolie hergestellt wird.

Nach einer vorteilhaften Ausgestaltung der Erfindung ist vorgesehen, daß als Trägerschicht eine Polyethylenfolie verwendet wird. Diese eignet sich insbesondere für die Weiterverarbeitung.

Nach einer weiteren vorteilhaften Ausgestaltung der Erfindung ist vorgesehen, daß die Trägerschicht einer Coronabehandlung ausgesetzt wird. Dadurch kann eine bessere Vernetzung des Klebers mit den Trägerschichten erzielt werden.

Nach einer weiteren vorteilhaften Ausgestaltung der Erfindung ist vorgesehen, daß eine erste und zweite Vorratsrolle zur Bereitstellung der Polymerfolie mit Stützfolien eingesetzt werden und den Vorratsrollen eine Spleißvorrichtung nachgeschalten wird, so daß das Ende des Films nach dem Abarbeiten von der ersten Vorratsrolle mit dem Film der weiteren Vorratsrolle Stoß an Stoß zur kontinuierlichen Bearbeitung verbunden werden kann. Dadurch kann die Effektivität erhöht und eine kontinuierliche Umpackung der Polymerfolie von Stützfolien auf Trägerschichten erfolgen. Vorteilhafterweise ist dieser Spleißvorrichtung ein Materialspeicher nachgeschaltet, aus dem während dem Wechsel der Vorratsrollen abgearbeitet wird.

Des weiteren ist eine erfindungsgemäße Vorrichtung zur Herstellung eines zumindest eine Polymerfolie mit Informationen und zumindest eine Trägerschicht enthaltenden Verbundes, insbesondere zur Durchführung des erfindungsgemäßen Verfahrens vorgesehen, bei der ein Film, bestehend aus einer Polymerfolie und beidseitig angeordneten Stützfolien einer ersten Bearbeitungsstation mit zumindest einer Delaminiervorrichtung, einer Laminiervorrichtung und einer Aushärtevorrichtung zuführbar ist und zumindest eine zweite Bearbeitungsvorrichtung nachgeschalten ist, die zumindest dem Aufbau der ersten Bearbeitungsvorrichtung entspricht. Durch die Hintereinanderschaltung der ersten und zumindest zweiten Bearbeitungsstation kann ein kontinuierlicher Austausch der auf beiden Seiten der Polymerfolie sich befindenden Stützfolien durch Trägerschichten in kontinuierlicher Weise erfolgen. Durch die kontinuierliche Laminierung und Delaminierung der Stütz- und Trägerschicht in einer ersten und zweiten Bearbeitungsstation können aufgrund der im wesentlichen gleichen Bearbeitungsparameter dieselben Voraussetzungen für das Aufbringen der Trägerschicht auf der Polymerfolie gegeben sein, so daß die Polymerfolie nahezu spannungsfrei zwischen den Trägerschichten aufgenommen ist.

Die weiteren vorteilhaften Ausgestaltungen der Vorrichtung sind in den weiteren Ansprüchen angegeben.

In den nachfolgenden Zeichnungen sind bevorzugte Ausführungsbeispiele näher beschrieben. Es zeigen:
- Figur 1: ein schematischer Querschnitt eines fälschungssicheren Dokumentes mit einem erfindungsgemäß hergestellten Verbund,
- Figur 2: eine schematische Seitenansicht der erfindungsgemäßen Vorrichtung zur Durchführung des Verfahrens und
- Figur 3: eine schematische Seitenansicht einer alternativen Vorrichtung zur Durchführung des Verfahrens.

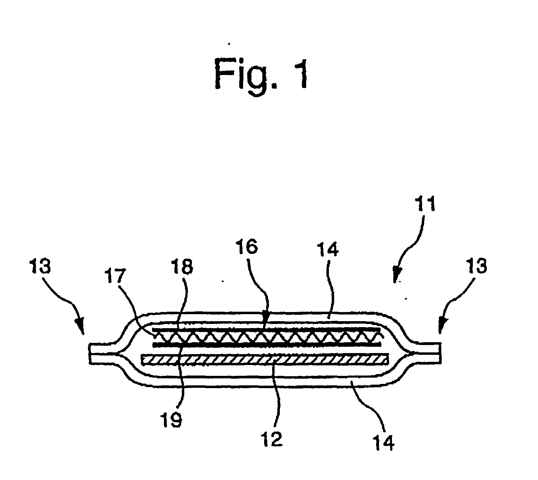

In Figur 1 ist schematisch ein Querschnitt eines fälschungssicheren Dokumentes 11, beispielsweise eines Personalausweises, dargestellt. Dieses Dokument 11 weist einen Informationsträger 12, vorzugsweise aus bedrucktem Papier oder dergleichen, auf, der durch vollständig im Randbereich 13 rundum miteinander verschweißte Folien 14 umgeben ist. Zwischen dem Informationsträger 12 und der Folie 14 ist beispielsweise ein erfindungsgemäß hergestellter Verbund 16 vorgesehen. Dieser Verbund 16 weist eine Polymerfolie 17 auf, die beidseitig durch eine erste Trägerschicht 18 und zweite Trägerschicht 19 kaschiert ist.

Die Polymerfolie 17 ist beispielsweise ein Photo-Polymerfilm, der mit Informationen versehen ist. Beispielsweise können ein Hologramm sowie weitere fotografische oder sonstige Informationen aufgebracht sein. Diese können eine Abfragemarke sein, um das Hologramm an einer definierten Position auf dem Informationsträger 12 zu positionieren, wobei diese Marke über einen Sensor abgetastet wird. Des weiteren kann eine belichtete Folie vorgesehen sein, die zu einer nachfolgend näher beschriebenen Bahnkantensteuerung verwendet wird.

Ebenso kann die Polymerfolie als Magnetstreifen Informationen speichern.

Die Trägerschichten 18, 19 sind vorteilhafterweise aus Polyethylenfolie ausgebildet. Weitere Materialien, welche die Anforderungen an die Trägerschichten erfüllen, sind ebenso denkbar.

Der Verbund 16, der vorzugsweise als Triplexverbund ausgebildet ist, wird vor dem Verschweißen der Folien 14 auf den Informationsträger 12 aufgebracht. Durch das Verschweißen der Folien 14 mit dem Informationsträger 12 wird der Verbund 16 gleichzeitig derart kaschiert, daß sich ebenfalls zwischen der Trägerschicht 18 und der Folie 14 sowie der Trägerschicht 19 und dem Informationsträger 12 eine Verbindung herstellen läßt, die sich ohne völlige Zerstörung nicht mehr voneinander entfernen läßt.

Die in Figur 1 dargestellte Anordnung des Verbundes 16 in dem Dokument 11 ist nur beispielhaft. Der Verbund 16 kann ebenso für Kreditkarten, Dokumente für den bargeldlosen Zahlungsverkehr, Betriebsausweise, Wählerkarten, Sozialversicherungskarten oder weitere Identifizierungskarten oder Ausweise vorgesehen sein. Der Verbund 16 kann ebenso aus mehr als drei Schichten bestehen, wobei die nachfolgend beschriebene Vorrichtung diese Aufgabe durch eine entsprechende Anpassung an die Anzahl der Vorrichtungen an die zu delaminierenden und laminierenden Schichten von und auf den Polymerfilm 17 ebenso ermöglicht.

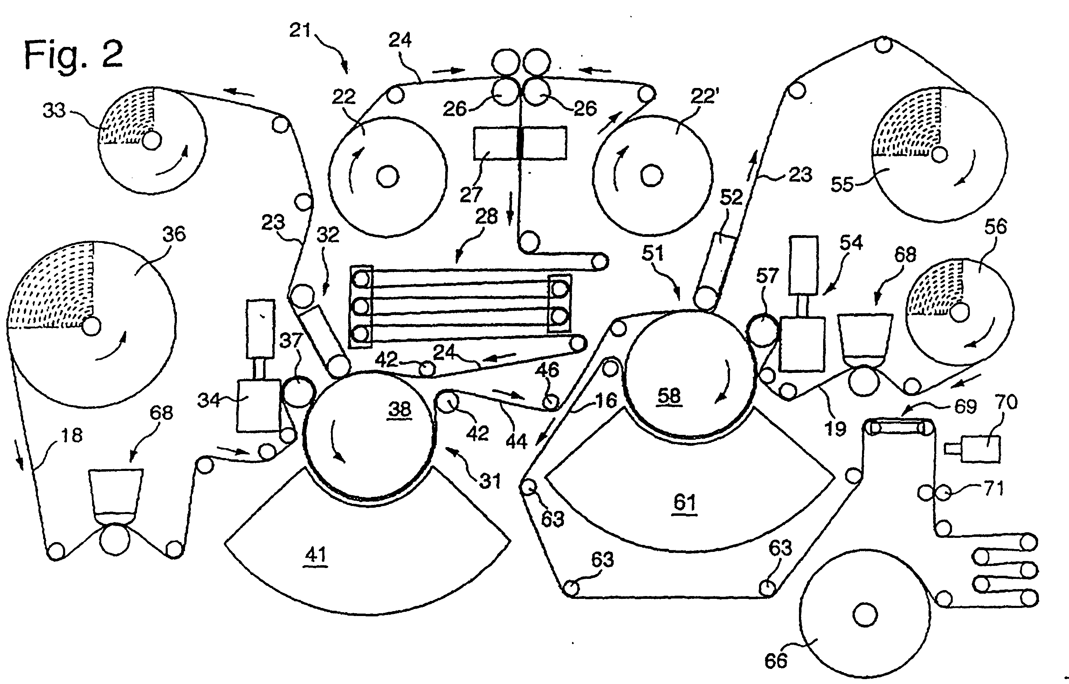

In Figur 2 ist beispielhaft ein Aufbau der erfindungsgemäßen Vorrichtung 21 zur Durchführung des erfindungsgemäßen Verfahrens dargestellt. Auf einer ersten Vorratsrolle 22 wird ein Film 24, bestehend aus einer Polymerfolie 17 mit einer beidseitig angeordneten Stützfolie 23 bereitgestellt. Dieser Film 24 wird von der Vorratsrolle 22 abgezogen und über eine Umlenkrolle 26 durch eine Spleißvorrichtung 27 hindurchgeführt. Nachfolgend ist eine Speichervorrichtung 28 vorgesehen, welche mehrere Umlenkpunkte aufweist. Am Ende der Speichervorrichtung 28 wird der Film 24 einer ersten Bearbeitungsstation 31 zugeführt.

Die erste Bearbeitungsstation 31 weist eine Delaminiervorrichtung 32 auf, durch welche die Stützfolie 23 von der Polymerfolie 17 abgelöst wird. Die Stützfolie 23 wird aus der Bearbeitungsstation 31 abgeführt und auf einer Aufwickelrolle 33 gespeichert. Der Delaminiervorrichtung 32 ist einer Laminiervorrichtung 34 nachgeschalten. Von einer Vorratsrolle 36 wird eine erste Trägerschicht 18 abgezogen und der Laminiervorrichtung 34 zugeführt. Während dem Zuführen der Trägerschicht 18 wird gleichzeitig eine Klebeschicht auf die Trägerschicht 18 oder Polymerfolie 17 aufgebracht. Über zumindest eine Anpreßwalze 37 wird die erste Trägerschicht 18 faltenfrei sowie frei von Luftblasen oder dergleichen auf die Polymerfolie 17 angedrückt, welche mit einer Walze 38 durch die erste Bearbeitungsstation 31 transportiert wird. Der Laminiervorrichtung 34 ist eine Aushärtevorrichtung 41 nachgeschalten. Die zwischen der Polymerfolie 17 und der auflaminierten ersten Trägerschicht 18 vorgesehene Klebeschicht wird durch eine UV-Strahlung in der Aushärtevorrichtung 41 ausgehärtet, so daß eine unlösbare Verbindung geschaffen wird, so daß sich die Polymerfolie 17 nicht ohne völlige Zerstörung von der Trägerschicht 18 entfernen läßt.

Der Einsatz von UV-vemetzbaren Klebesystemen weist neben der unlösbaren Verbindung des weiteren den Vorteil auf, daß eine schnelle Aushärtung ermöglicht ist, so daß das die erste Bearbeitungsstation 31 verlassende Laminat 44, bestehend aus einer Stützfolie 23, einer Polymerfolie 17 und einer ersten Trägerschicht 18 einen festen Verbund zumindest zwischen der Polymerfolie 17 und der Trägerschicht 18 bildet. Über zumindest eine Umlenkrolle 46 wird dieses Laminat 44 einer zweiten Bearbeitungsstation 51 zugeführt. Das Laminat 44 wird über eine Walze 52 durch die zweite Bearbeitungsstation 51 hindurchgeführt.

Die zweite Bearbeitungsstation 51 entspricht im Aufbau der ersten Bearbeitungsstation 31, wobei die zweite Bearbeitungsstation 51 spiegelbildlich zur ersten Bearbeitungsstation 31 angeordnet ist. Dadurch ist ermöglicht, daß lediglich durch eine Umkehr der Drehrichtung der Walze 58 zur Walze 38 in einem kontinuierlichen Arbeitsablauf nacheinanderfolgend die Stützfolien 23 durch eine erste Trägerschicht 18 und zweite Trägerschicht 19 ersetzt werden können. Über eine Delaminiervorrichtung 52 wird die Schutzfolie 23 von dem Laminat 44 abgelöst und auf einer Aufwickelrolle 53 gespeichert. Der Delaminiervorrichtung 52 ist eine Laminiervorrichtung 54 nachgeschalten, welche in Analogie zur Laminiervorrichtung 34 eine zweite Trägerschicht 19 von einer Vorratsrolle 56 abzieht und auf der Polymerfolie 17 über zumindest eine Anpreßwalze 57 auflaminiert. Der dadurch entstehende Verbund 16 wird einer Aushärtevorrichtung 61 zugeführt, welcher der Aushärtevorrichtung 41 entspricht. Der Verbund 16 wird nach Durchlaufen der Aushärtevorrichtung 61 über Umlenkrollen 63 aus der zweiten Bearbeitungsstation 51 herausgeführt.

Im Ausführungsbeispiel gemäß Figur 2 wird der erfindungsgemäß hergestellte Verbund 16 über eine Bahnkantensteuerung 69, die mittels einer Zeilenkamera 70 eine auf dem Photo-Polymerfilm 17 einbelichtete Linie erfaßt und mit einer Genauigkeit von +/- 0,1 mm einem Schneidewerk 71 zuführt, in welchem die beiden Ränder des Verbundes abgeschnitten werden, so daß der Verbund 16 auf eine genau definierte Breite geschnitten ist. Die Steuerung über die einbelichtete Linie ist für die Weiterverarbeitung sehr wichtig, denn die auf dem Photo-Polymerfilm 17 einbelichteten Informationen müssen für die Weiterverarbeitung zur Verbundkante genau positioniert werden

Der auf eine definierte Breite geschnittene Verbund 16 wird über eine Speichervorrichtung 72, welche mehrere Umlenkpunkte aufweist, auf einer Vorratswelle 66 aufgewickelt und gespeichert.

Vorteilhafterweise ist ein Wendewickel vorgesehen, so daß immer eine leere Hülse zur Aufwicklung des Verbundes 16 bereitsteht. Des weiteren kann alternativ kann vorgesehen sein, daß der Verbund 16 einer nachfolgenden Station zur Weiterverarbeitung des Verbundes 16 und zur Herstellung von fälschungssicheren Dokumenten weitergeleitet wird.

Die Delaminiervorrichtung 32, 52 und Laminiervorrichtung 34, 54 in der ersten und zweiten Bearbeitungsstation 31, 51 sind vorteilhafterweise unmittelbar zueinander benachbart angeordnet, so daß bei einer wenigstens dreiviertel Umschlingung der Walze 38, 58 durch Leitwalzen 42, 62 ein hinreichend großer Umfangsabschnitt für die Aushärtevorrichtung 41, 61 verbleibt. Die Leitwalzen 42, 62 sind vorteilhafterweise einstellbar, so daß der Umschlingungswinkel der Walzen 38, 58 einstellbar und an entsprechende Anwendungen anpaßbar ist.

Zur Vorratsrolle 22 kann spiegelbildlich die Vorratsrolle 22' vorgesehen sein, so daß beidseitig zur Spleißvorrichtung 27 eine den Film 24 zur Verfügung stellende Vorratsrolle vorgesehen ist. Dadurch kann ermöglicht sein, daß nach Abarbeiten beispielsweise der Vorratsrolle 22 ein Wechsel zur Zuführung des Filmes 24 von der Vorratsrolle 22' erfolgen kann. Da die Spleißvorrichtung 27 zur Stoß-an-Stoß-Verbindung des Filmendes 24 der Vorratsrolle 22 zum Filmanfang der Vorratsrolle 22' einen Stillstand erfordert, wird zwischenzeitlich der Film 24 aus der Speichervorrichtung 28 abgezogen. Nach dem die Stoß-an-Stoß-Verbindung hergestellt wurde, wird zu Beginn der Vorratsrolle 22' der Film 24 mit erhöhter Geschwindigkeit gegenüber der Bearbeitungsgeschwindigkeiten der ersten und zweiten Bearbeitungsstation 31, 51 abgezogen, damit die Speichervorrichtung 28 wieder aufgefüllt werden kann.

Zwischen der Vorratsrolle 36, 56 der ersten und zweiten Trägerschicht 18, 19 und der Laminiervorrichtung 34 und 54 kann jeweils eine Coronastation 68 vorgesehen sein, um die erste und zweite Trägerschicht 18, 19 mit Elektronen zu besprühen, um die Oberflächenspannung und somit die Klebeverbindung zu verbessern.

In Abhängigkeit der Ausbildung des Verbundes 16 kann in der ersten Bearbeitungsstation als auch in der zweiten Bearbeitungsstation wahlweise zwischen der Delaminiervorrichtung 32, 52 und Laminiervorrichtung 35, 54 eine weitere Delaminier- und/oder Laminierstation vorgesehen sein, um gegebenenfalls zwischen der Polymerfolie 17 und der Trägerschicht 18 und/oder 19 eine weitere Folie oder Film oder dergleichen abzulösen oder einzuarbeiten. In diesem Fall können die Walzen 38, 58 im Durchmesser größer ausgebildet werden, daß eine entsprechende Aneinanderreihung der Vorrichtungen in einer Station ermöglicht werden kann.

Durch das kontinuierliche Verfahren gemäß der erfindungsgemäßen Vorrichtung können Arbeitsgeschwindigkeiten von wenigstens 25 m/min. erzielt werden. Eine sichere Verarbeitung der beispielsweise zwischen 5 und 50 µm dicken Polymerfolie 17 kann durch dieses Inlineverfahren ermöglicht werden. Die Delaminierung der Stützfolien 23 und Laminierung der Trägerschichten 18, 19 können durch geringe Wärmeeinwirkung unterstützt werden. Des weiteren ist das UV-vernetzbare Klebesystem derart ausgelegt, daß die auflaminierten Trägerschichten 18, 19 nach Verlassen der Aushärtevorrichtung 41, 61 im wesentlichen vollständig zur Polymerfolie 17 vernetzt sind.

Die Bezeichnung Polymerfolie 17 steht ebenso für weitere Informationsträger, welche eine äußerst dünne Schichtdicke aufweisen und zur Aufnahme von Information geeignet sind, und für die Weiterverarbeitung in fälschungssicheren Dokumenten erforderlich ist, daß zumindest beidseitig eine Trägerschicht vorgesehen ist. Bei diesen Trägerschichten 18, 19 handelt es sich beispielsweise um Polyethylenschichten, die zumindest nach der Fertigstellung der fälschungssicheren Dokumente transparent sind. Altemativ kann auch vorgesehen sein, daß nur eine der beiden Trägerschichten 18, 19 transparent ausgebildet ist.

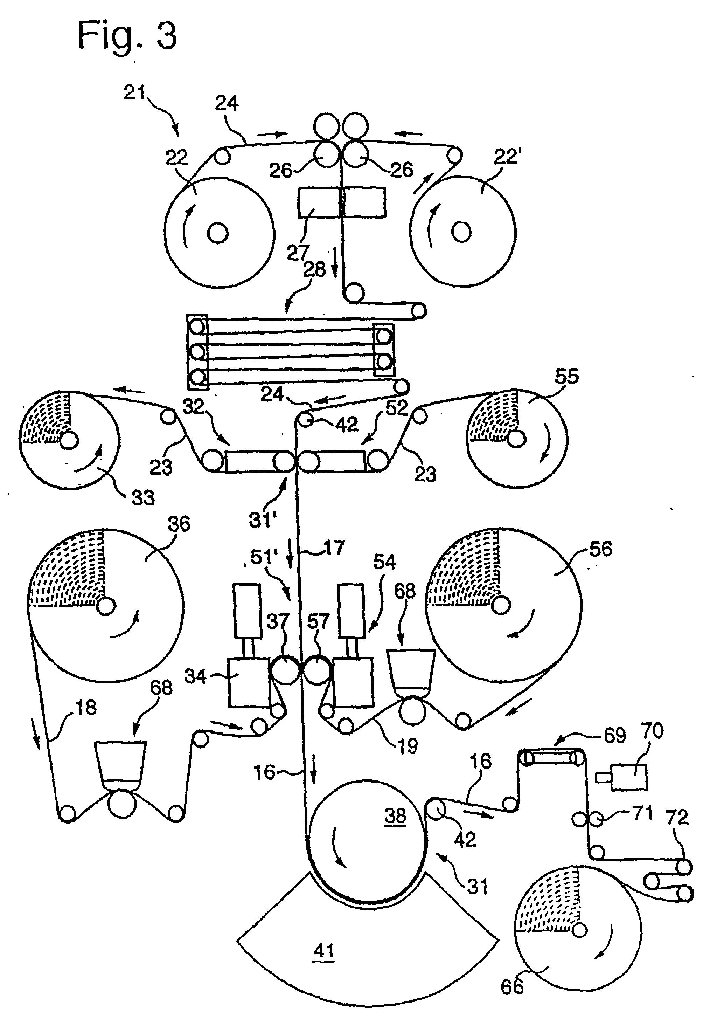

In Figur 3 ist eine alternative Ausgestaltung der erfindungsgemäßen Vorrichtung dargestellt. Diese Vorrichtung weist ebenso den Vorteil auf, daß in einem kontinuierlichen Arbeitsgang sowohl ein Delaminieren als auch ein Laminieren zur Herstellung eines Verbundes 16 möglich ist. Bei dieser Vorrichtung wird in der Bearbeitungsstation 31' gleichzeitig die auf beiden Seiten der Polymerfolie 17 vorgesehenen Stützfolien 23 abgezogen und Aufwickelrollen 33, 55 zugeführt. Aus der Bearbeitungsstation 31' wird nunmehr gemäß dem Ausführungsbeispiel lediglich der Polymerfilm 17 herausgeführt und der Bearbeitungsstation 51' zugeführt. In dieser Bearbeitungsstation 51' werden gleichzeitig die Trägerschichten 18, 19 aufgetragen. Aus der Bearbeitungsstation 51' wird der Verbund 16 herausgeführt und einer Aushärtevorrichtung 41 zugeführt. Durch die im wesentlichen transparent ausgebildeten Trägerschichten 18, 19 können die Klebeschichten zwischen der Trägerschicht 18 und der Polymerfolie 17 sowie zwischen der Trägerschicht 19 und der Polymerfolie 17 gleichzeitig ausgehärtet werden. Nach dem Durchlaufen der Aushärtevorrichtung 41 wird der Verbund 16 über die Umlenkrolle 42 aus der Aushärtevorrichtung 41 herausgeführt und in Analogie zu Figur 2 weiteren Bearbeitungsstationen zugeführt.

Die in Figur 3 dargestellte Anordnung ermöglicht ebenso ein schnelles Umpacken von einer in Stützfolien 23 eingebetteten Polymerfolie 17 in Trägerschichten 18, 19.

Alternativ kann vorgesehen sein, daß beispielsweise anstelle der symmetrischen Anordnung der Delaminiervorrichtungen 32, 52 in der Bearbeitungsstation 31' und den Laminiervorrichtungen 34, 54 in der Bearbeitungsstation 51' eine versetzte Anordnung zueinander vorgesehen ist, so daß beispielsweise der Laminiervorrichtung 32 eine Druckwalze gegenüberliegend angeordnet ist und der nachgeschalteten Delaminiervorrichtung 52 ebenfalls eine Druckwalze gegenüberliegend vorgesehen ist. Dies kann ebenso für die Laminiervorrichtungen 34, 54 gelten.

Beliebige Kombinationen zwischen den oben genannten Ausführungsformen sind ebenso denkbar.

Des weiteren können zusätzliche Delaminiervorrichtungen oder Laminiervorrichtungen einzeln oder paarweise vorgesehen sein, um für den jeweiligen Anwendungsfall einen spezifischen Verbund aus zwei, drei oder mehr Lagen herzustellen.

Die Delaminiervorrichtungen 32, 52 und Laminiervorrichtungen 34, 54 sind spiegelbildlich zu dem Bahnverlauf der Polymerfolie 17 angeordnet und im Aufbau identisch ausgebildet. In Abhängigkeit von Bauraum und Größe können die Anordnungen abweichend hiervon gewählt werden, so daß eine anwendungsspezifische Anordnung, die von dem symmetrischen Aufbau der Bearbeitungsstationen 31', 51' abweicht, vorgesehen sein kann.

Diese alternative Ausgestaltung der Vorrichtung gemäß Figur 3 kann insbesondere dann vorgesehen sein, wenn die Polymerfolie 17 eine Mindestzugfestigkeit aufweist, damit gegebenenfalls auftretende Bahnspannungen zwischen der ersten und zweiten Bearbeitungsstation 31' und 51' aufgenommen werden können. Im übrigen gelten für diese Anordnung der Vorrichtung ebenso die zu Figur 2 ausgeführten Vorteile und Variationsmöglichkeiten.

## Patentansprüche

1. Verfahren zum Herstellen eines zumindest eine Polymerfolie mit Informationen und zumindest eine Trägerschicht enthaltenden Verbundes (16) zur Weiterverarbeitung für fälschungssichere Dokumente
- bei dem ein Film (24) bestehend aus zumindest einer Polymerfolie (17) mit zumindest beidseitig angeordneten Stützfolien (23) einer ersten Bearbeitungsstation (31) zugeführt wird, wobei in der ersten Bearbeitungsstation (31) auf einer ersten Seite der Polymerfolie (17) zumindest eine Stützfolie (23) delaminiert wird, nachfolgend zumindest eine Trägerschicht (18) mit einem Klebemittel auflaminiert wird und anschließend einer vernetzungsaktiven UV-Strahlung ausgesetzt wird,
- bei dem ein aus der ersten Bearbeitungsstation (31) herausgeführtes Laminat (44) einer zweiten Bearbeitungsstation (52) zugeführt wird, wobei auf einer zweiten Seite des Laminats (44) zumindest eine Stützfolie (23) delaminiert wird, nachfolgend zumindest eine Trägerschicht (19) mit einem Klebemittel auflaminiert und anschließend einer vernetzungsaktiven UV-Strahlung ausgesetzt wird.

2. Verfahren zum Herstellen eines zumindest eine Polymerfolie mit Inforrnationen und zumindest eine Trägerschicht enthaltenden Verbundes (16) zur Weiterverarbeitung für fälschungssichere Dokumente
- bei dem ein Film (24) bestehend aus zumindest einer Polymerfolie (17) mit zumindest beidseitig angeordneten Stützfolien (23) einer ersten Bearbeitungsstation (31') zugeführt wird, wobei in der ersten Bearbeitungsstation (31) auf jeder Seite der Polymerfolie (17) zumindest eine Stützfolie (23) delaminiert wird,
- bei dem die aus der ersten Bearbeitungsstation (31') herausgeführte Polymerfolie (17) einer zweiten Bearbeitungsstation (51') zugeführt wird, wobei auf jeder Seite der Polymerfolie (17) zumindest eine Trägerschicht (18, 19) mit einem Klebemittel auflaminiert und anschließend einer vemetzaktiven UV-Strahlung ausgesetzt wird.

3. Verfahren nach Anspruch 1 oder 2, **dadurch gekennzeichnet, daß** der Verbund (16) aus der zweiten Bearbeitungsstation (51, 51') abgeführt und auf einer Vorratsrolle (66) aufgewickelt oder einer nachfolgenden Bearbeitungsstation zugeführt wird.

4. Verfahren nach einem der vorhergehenden Ansprüche, **dadurch gekennzeichnet, daß** ein Film (24), bestehend aus einer Polymerfolie (17) mit Information und beidseitig angeordneten Stützfolien (23) von zumindest einer Vorratsrolle (22) abgezogen oder von einer vorherigen Bearbeitungsvorrichtung einer ersten Bearbeitungsstation (31, 31') zugeführt wird.

5. Verfahren nach Anspruch 1, **dadurch gekennzeichnet, daß** die erste und zweite Bearbeitungsstation (31, 51) eine Walze (38, 58) aufweisen, an deren Umfang zumindest jeweils eine Delaminiervorrichtung (32, 52), eine Laminiervorrichtung (34, 54) und eine Aushärtevorrichtung (41, 61) positioniert werden.

6. Verfahren nach Anspruch 5, **dadurch gekennzeichnet, daß** die Walze (38, 58) der ersten und zweiten Bearbeitungsstation (31, 51) durch das Laminat (44) und dem Verbund (16) um wenigstens 180°, vorzugsweise 270° umschlungen wird.

7. Verfahren nach Anspruch 1, **dadurch gekennzeichnet, daß** durch die Aushärtevorrichtung (41) das Klebemittel zwischen der ersten Trägerschicht (18) und der Polymerfolie (17) zumindest vor Erreichen der zweiten Bearbeitungsstation (51) ausgehärtet wird.

8. Verfahren nach einem der vorhergehenden Ansprüche, **dadurch gekennzeichnet, daß** als Trägerschicht (18, 19) eine Polyethylenfolie verwendet wird.

9. Verfahren nach einem der vorhergehenden Ansprüche, **dadurch gekennzeichnet, daß** die Trägerschicht (18, 19) einer Coronabehandlung ausgesetzt wird.

10. Verfahren nach einem der vorhergehenden Ansprüche, **dadurch gekennzeichnet, daß** als Polymerfolie (17) ein Photo-Polymerfilm, der zumindest teilweise belichtet und vorzugsweise mit Hologrammen versehen ist, eingesetzt wird.

11. Verfahren nach einem der vorhergehenden Ansprüche, **dadurch gekennzeichnet, daß** eine erste und eine zweite Vorratsrolle (22, 22') eingesetzt wird und den Vorratsrollen (22, 22') eine Spleißvorrichtung (27) nachgeschalten ist, durch welche nach dem Aufbrauchen der einen Vorratsrolle (22; 22') der Film (24) der weiteren Vorratsrolle (22, 22') Stoß an Stoß zur kontinuierlichen Bearbeitung verbunden wird.

12. Verfahren nach einem der vorhergehenden Ansprüche, **dadurch gekennzeichnet, daß** zwischen der Vorratsrolle (22, 22') und der ersten Bearbeitungsstation (31) eine Speichervorrichtung (28) vorgesehen ist, die während dem Wechsel der Vorratsrollen (22, 22') abgearbeitet wird.

13. Vorrichtung zur Herstellung eines zumindest eine Polymerfolie (17) mit Informationen und zumindest eine Trägerschicht enthaltenden Verbundes (16) zur Weiterverarbeitung für fälschungssichere Dokumente, insbesondere zur Durchführung des Verfahrens gemäß einem der Ansprüche 1 oder 3 bis 12 wobei ein Film (24) bestehend aus zumindest einer Polymerfolie und zumindest beidseitig angeordneten Stützfolien (23) einer ersten Bearbeitungsstation (31) zuführbar ist, wobei die erste Bearbeitungsstation (31) zumindest eine Delaminiervorrichtung (32) für eine erste Stützfolie (23) des Filmes (24), eine Laminiervorrichtung (34) für zumindest eine erste Trägerschicht (18) und eine Aushärtevorrichtung (41) aufweist und wobei ein durch die erste Bearbeitungsstation (31) gebildetes Laminat (44) zumindest einer zweiten Bearbeitungsstation (52) zuführbar ist, die zumindest eine Delaminiervorrichtung (52) für die weitere Stützfolie (23), eine Laminiervorrichtung (34) für zumindest eine zweite Trägerschicht (19) und eine Aushärtevorrichtung (61) aufweist.

14. Vorrichtung zur Herstellung eines zumindest eine Polymerfolie (17) mit Informationen und zumindest eine Trägerschicht enthaltenden Verbundes (16) zur Weiterverarbeitung für fälschungssichere Dokumente, insbesondere zur Durchführung des Verfahrens gemäß einem der Ansprüche 2 bis 4 oder 8 bis 12, wobei ein Film (24) bestehend aus zumindest einer Polymerfolie (17) und zumindest beidseitig angeordneten Stützfolien (23) einer ersten Bearbeitungsstation (31') zuführbar ist, wobei die erste Bearbeitungsstation (31') eine erste und eine zweite Delaminiervorrichtung (32, 52) für die Stützfolie (23) des Laminats (24) aufweist, und wobei eine weitere Bearbeitungsstation (51') mit einer ersten und zweiten Laminiervorrichtung (34, 54) für zumindest eine erste und zweite Trägerschicht (18, 19) und zumindest eine Aushärtevorrichtung (41) vorgesehen ist.

15. Vorrichtung nach Anspruch 13 oder 14, **dadurch gekennzeichnet, daß** der ersten Bearbeitungsstation (31, 31') zumindest eine Vorratsrolle (22) zur Abgabe des Filmes (24) vorgeschalten und der letzten Bearbeitungsstation zumindest eine Aufwickelrolle (66) zur Speicherung des Verbundes (16) nachgeschalten ist.

16. Vorrichtung nach einem der Ansprüche 13 bis 15, **dadurch gekennzeichnet, daß** zumindest zwei Vorratsrollen (22, 22') vorgesehen sind und zwischen den Vorratsrollen (22, 22') und einer ersten Bearbeitungsstation (31, 31') eine Spleißvorrichtung (27) angeordnet ist.

17. Vorrichtung nach Anspruch 16, **dadurch gekennzeichnet, daß** der Spleißvorrichtung (27) eine Speichervorrichtung (28) nachgeschalten ist.

18. Vorrichtung nach einem der Ansprüche 13 bis 17, **dadurch gekennzeichnet, daß** zumindest eine Bahnkantensteuerung den Verbund (16), über eine einbelichtete Leitlinie einem Schneidwerk (71) zuführt.

19. Vorrichtung nach einem der Ansprüche 13 bis 18, **dadurch gekennzeichnet, daß** in einem Schneidwerk (71) der Verbund auf genaue Bahnbreite geschnitten wird und die Informationsträger über eine Leitlinie in einem definierten Abstand zur Bahnkante positionierbar sind.

20. Vorrichtung nach einem der Ansprüche 13 bis 19, **dadurch gekennzeichnet, daß** zumindest zwei Aufwickelrollen (66) zur kontinuierlichen Aufwicklung vorgesehen sind, welche in einem fliegenden Wechsel austauschbar sind.

21. Vorrichtung nach Anspruch 13, **dadurch gekennzeichnet, daß** der Umschlingungswinkel einer Walze (38, 58) der ersten und zweiten Bearbeitungsstation (31, 51) durch die Anordnung von Leitwalzen (42, 62) einstellbar ist.

22. Vorrichtung nach Anspruch 13, **dadurch gekennzeichnet, daß** die Walzen (38, 58) der ersten und zweiten Bearbeitungsstation (31, 51) gemeinsam angetrieben sind.

23. Vorrichtung nach Anspruch 13, **dadurch gekennzeichnet, daß** die Walze (38) der ersten Bearbeitungsstation (31) in Schleppbetrieb und die Walze (58) der zweiten Bearbeitungsstation (51) angetrieben ist.

24. Vorrichtung nach Anspruch 13, **dadurch gekennzeichnet, daß** die Drehrichtungen der Walzen (38, 58) der ersten und zweiten Bearbeitungsstation (31, 51) gegenläufig sind.

## Claims

1. Process for producing a laminate (16), comprising at least one polymer film with information and at least one substrate, for further processing for forgery-proof documents,
- in which a film (24), comprising at least one polymer film (17) with supporting films (23) arranged at least on both sides, is fed to a first processing station (31), and, in the first processing station (31), at least one supporting film (23) is delaminated on a first side of the polymer film (17), after which at least one substrate (18) is laminated on by an adhesive and subsequently exposed to a crosslinking-active UV radiation, and
- in which a laminate (44) led out from the first processing station (31) is fed to a second processing station (51), and at least one supporting film (23) is delaminated on a second side of the laminate (44), after which at least one substrate (19) is laminated on by an adhesive and subsequently exposed to a crosslinking-active UV radiation.

2. Process for producing a laminate (16), comprising at least one polymer film with information and at least one substrate, for further processing for forgery-proof documents,
- in which a film (24), comprising at least one polymer film (17) with supporting films (23) arranged at least on both sides, is fed to a first processing station (31'), and, in the first processing station (31'), at least one supporting film (23) is delaminated on each side of the polymer film (17), and
- in which the polymer film (17) led out from the first processing station (31') is fed to a second processing station (51'), and at least one substrate (18, 19) is laminated on by an adhesive on each side of the polymer film (17) and subsequently exposed to a crosslinking-active UV radiation.

3. Process according to Claim 1 or 2, **characterized in that** the laminate (16) is led out from the second processing station (51, 51') and wound up on a supply roll (66) or is fed to a downstream processing station.

4. Process according to one of the preceding claims, **characterized in that** a film (24), comprising a polymer film (17) with information and supporting films (23) arranged on both sides, is drawn off from at least one supply roll (22) or from a prior processing device and is fed to a first processing station (31, 31').

5. Process according to Claim 1, **characterized in that** the first and second processing stations (31, 51) have a roller (38, 58), on the circumference of which there are positioned in each case at least one delaminating device (32, 52), at least one laminating device (34, 54) and at least one curing device (41, 61).

6. Process according to Claim 5, **characterized in that** the roller (38, 58) of the first and second processing stations (31, 51) is wrapped around by the laminate (44) and the laminate (16) by at least 180°, preferably 270°.

7. Process according to Claim 1, **characterized in that** the adhesive between the first substrate (18) and the polymer film (17) is cured by the curing device (41) at least before reaching the second processing station (51).

8. Process according to one of the preceding claims, **characterized in that** a polyethylene film is used as the substrate (18, 19).

9. Process according to one of the preceding claims, **characterized in that** the substrate (18, 19) is subjected to a corona treatment.

10. Process according to one of the preceding claims, **characterized in that** a photo-polymer film, which is at least partially exposed and preferably provided with holograms, is used as the polymer film (17).

11. Process according to one of the preceding claims, **characterized in that** a first and a second supply roll (22, 22') is used, and arranged downstream of the supply rolls (22, 22') is a splicing device (27), by which, after one supply roll (22; 22') has been used up, the film (24) of the further supply roll (22, 22') is joined with a butt joint for continuous processing.

12. Process according to one of the preceding claims, **characterized in that** a storage device (28), from which film is taken while the supply rolls (22, 22') are being changed over, is provided between the supply roll (22, 22') and the first processing station (31).

13. Apparatus for producing a laminate (16), comprising at least one polymer film (17) with information and at least one substrate, for further processing for forgery-proof documents, in particular for carrying out the process according to one of Claims 1 or 3 to 12 whereby a film (24), comprising at least one polymer film and supporting films (23) arranged at least on both sides, is fed to a first processing station (31), the first processing station (31) has at least one delaminating device (32) for a first supporting film (23) of the film (24), at least one laminating device (34) for at least a first substrate (18) and at least one curing device (41), and a laminate (44) formed by the first processing station (31) is fed to at least a second processing station (52), which has at least one delaminating device (52) for the further supporting film (23), at least one laminating device (34) for at least a second substrate (19) and at least one curing device (61).

14. Apparatus for producing a laminate (16), comprising at least one polymer film (17) with information and at least one substrate, for further processing for forgery-proof documents, in particular for carrying out the process according to one of Claims 2 to 4 or 8 to 12 whereby a film (24), comprising at least one polymer film (17) and supporting films (23) arranged at least on both sides, is fed to a first processing station (31'), the first processing station (31') has a first and a second delaminating device (32, 52) for the supporting film (23) of the laminate (24) , and a further processing station (51'), with a first and second laminating device (34, 54) for at least a first and second substrate (18, 19) and at least one curing device (41), is provided.

15. Apparatus according to Claim 13 or 14, **characterized in that** arranged upstream of the first processing station (31, 31') is at least one supply roll (22) for delivering the film (24) and arranged downstream of the last processing station is at least one winding-up roll (66) for storing the laminate (16).

16. Apparatus according to one of Claims 13 to 15, **characterized in that** at least two supply rolls (22, 22') are provided and a splicing device (27) is arranged between the supply rolls (22, 22') and a first processing station (31, 31').

17. Apparatus according to Claim 16, **characterized in that** a storage device (28) is arranged downstream of the splicing device (27).

18. Apparatus according to one of Claims 13 to 17, **characterized in that** at least one web edge control feeds the laminate (16) to a cutting mechanism (71) by means of a guide line created by exposure.

19. Apparatus according to one of Claims 13 to 18, **characterized in that**, in a cutting mechanism (71), the laminate is cut to a precise web width and the information carriers is positioned at a defined distance from the edge of the web by means of a guide line.

20. Apparatus according to one of Claims 13 to 19, **characterized in that** at least two winding-up rolls (66), which is changed over on the run, are provided for continuous winding up.

21. Apparatus according to Claim 13, **characterized in that** the angle of wrap of a roller (38, 58) of the first and second processing stations (31, 51) is adjustable by the arrangement of guide rollers (42, 62).

22. Apparatus according to Claim 13, **characterized in that** the rollers (38, 58) of the first and second processing stations (31, 51) are driven jointly.

23. Apparatus according to Claim 13, **characterized in that** the roller (38) of the first processing station (31) is driven in pulling operation and the roller (58) of the second processing station (51) is driven in pushing operation.

24. Apparatus according to Claim 13, **characterized in that** the directions of rotation of the rollers (38, 58) of the first and second processing stations (31, 51) are opposing.

## Revendications

1. Procédé de fabrication d'un stratifié (16) qui contient au moins une feuille polymère dotée d'informations et au moins une couche porteuse et destiné à être encore traité pour donner des documents infalsifiables,
- dans lequel un film (24) constitué d'au moins une feuille polymère (17) et doté de feuilles de soutien (23) sur au moins deux faces est apporté dans un premier poste de traitement (31), au moins une feuille de support (23) étant délaminée sur un premier côté de la feuille polymère (17) dans le premier poste de traitement (31), et ensuite au moins une couche porteuse (18) dotée d'un adhésif y est laminée et ensuite exposée à un rayonnement UV qui provoque la réticulation,
- dans lequel un laminé (44) extrait du premier poste de traitement (31) est apporté dans un deuxième poste de traitement (52) dans lequel au moins une feuille de soutien (23) située sur un deuxième côté du laminé (44) est délaminée, au moins une couche porteuse (19) dotée d'un adhésif étant ensuite laminée sur ce laminé et étant ensuite exposée à un rayonnement UV qui provoque la réticulation.

2. Procédé de fabrication d'un stratifié (16) qui contient au moins une feuille polymère dotée d'informations et au moins une couche porteuse et destiné à être encore traité pour donner des documents infalsifiables,
- dans lequel un film (24) constitué d'au moins une feuille polymère (17) et doté de feuilles de soutien (23) sur au moins deux faces est apporté dans un premier poste de traitement (31'), au moins une feuille de support (23) étant délaminée sur un premier côté de la feuille polymère (17) dans le premier poste de traitement (31),
- dans lequel la feuille polymère (17) extraite du premier poste de traitement (31') est amenée à un deuxième poste de traitement (51'), au moins une couche porteuse (18, 19) dotée d'un adhésif étant laminée sur chaque côté de la feuille polymère (17) et étant ensuite exposée à un rayonnement UV qui provoque la réticulation.

3. Procédé selon les revendications 1 ou 2, **caractérisé en ce que** le stratifié (16) est extrait du deuxième poste de traitement (51, 51') et est enroulé sur un rouleau de stockage (66) ou est apporté à un poste de traitement suivant.

4. Procédé selon l'une des revendications précédentes, **caractérisé en ce qu'**un film (24) est constitué d'une feuille polymère (17) dotée d'informations et dotée sur ses deux faces de feuilles de support (23) est étiré d'au moins un rouleau de stockage (22) ou est apporté dans un premier poste de traitement (31, 31') en provenance d'un dispositif de traitement précédent.

5. Procédé selon la revendication 1, **caractérisé en ce que** le premier et le deuxième poste de traitement (31, 51) présente un cylindre (38, 58) à la périphérie duquel sont disposés au moins un dispositif de délamination (32, 52), un dispositif de lamination (34, 54) et un dispositif de durcissement (41, 61).

6. Procédé selon la revendication 5, **caractérisé en ce que** les cylindres (38, 58) du premier et du deuxième poste de traitement (31, 51) sont entourés par le laminé (44) et le stratifié (16) sur au moins 180° et de préférence sur 270°.

7. Procédé selon la revendication 1, **caractérisé en ce que** l'adhésif situé entre la première couche porteuse (18) et la feuille polymère (17) est durci par le dispositif de durcissement (41) au plus tard avant l'arrivée dans le deuxième poste de traitement (51).

8. Procédé selon l'une des revendications précédentes, **caractérisé en ce que** comme couche porteuse (18, 19), on utilise une feuille de polyéthylène.

9. Procédé selon l'une des revendications précédentes, **caractérisé en ce que** la couche porteuse (18, 19) subit un traitement Corona.

10. Procédé selon l'une des revendications précédentes, **caractérisé en ce que** comme feuille polymère (17), on utilise un film de photo-polymère qui est éclairé au moins en partie et qui est de préférence doté d'hologrammes.

11. Procédé selon l'une des revendications précédentes, **caractérisé en ce que** l'on utilise un premier et un deuxième cylindre de stockage (22, 22'), les rouleaux de stockage (22, 22') étant suivis par un dispositif de ligaturage (27) par lequel, après que l'un des rouleaux de stockage (22, 22') a été épuisé, le film (24) est relié bout-à-bout à l'autre rouleau de stockage (22, 22') en vue d'un traitement en continu.

12. Procédé selon l'une des revendications précédentes, **caractérisé en ce qu'**un dispositif d'accumulation (28) qui est utilisé pendant le remplacement des rouleaux de stockage (22, 22') est prévu entre les rouleaux de stockage (22, 22') et le premier poste de traitement (31).

13. Dispositif de fabrication d'un stratifié (16) qui contient au moins une feuille polymère (17) dotée d'informations et au moins une couche porteuse, en vue d'être traité ensuite pour fournir des documents infalsifiables, en particulier en vue de la mise en oeuvre du procédé selon l'une des revendications 1 ou 3 à 12, dans lequel un film (24) constitué d'au moins une feuille polymère et de feuilles de support (23) disposées au moins sur les deux faces peuvent être amenées dans un premier poste de traitement (31), le premier poste de traitement (31) présentant au moins un dispositif de délamination (32) d'une première feuille de support (23) du film (24), un dispositif (34) de lamination d'au moins une première couche porteuse (18) et un dispositif de durcissement (41), un laminé (44) formé par le premier poste de traitement (31) pouvant être amené à au moins un deuxième poste de traitement (52) qui présente au moins un dispositif (52) de délamination de l'autre feuille de support (23), un dispositif (34) de lamination d'au moins une deuxième couche porteuse (19) et un dispositif de durcissement (61).

14. Dispositif de fabrication d'un stratifié (16) qui contient au moins une feuille polymère (17) dotée d'informations et au moins une couche porteuse, en vue d'être traité ensuite pour fournir des documents infalsifiables, en particulier en vue de la mise en oeuvre du procédé selon l'une des revendications 2 à 4 ou 8 à 12, dans lequel un film (24) constitué d'au moins une feuille polymère (17) et de feuilles de support (23) disposées au moins sur les deux faces peut être amené à un premier poste de traitement (31'), le premier poste de traitement (31') présentant un premier et un deuxième dispositif (32, 52) de délamination des feuilles de support (23) du laminé (24), un autre poste de traitement (51') doté d'un premier et d'un deuxième dispositif (34, 54) de lamination d'au moins une première et une deuxième couche porteuse (18, 19) et au moins un dispositif de durcissement (41) étant prévu.

15. Dispositif selon les revendications 13 ou 14, **caractérisé en ce qu'**au moins un rouleau de stockage (22) destiné à délivrer le film (24) est raccordé en amont du premier poste de traitement (31, 31'), et au moins un rouleau d'enroulement (66) destiné à accumuler le stratifié (16) étant raccordé en aval du dernier poste de traitement.

16. Dispositif selon l'une des revendications 13 à 15, **caractérisé en ce qu'**au moins deux rouleaux de stockage (22, 22') sont prévus, un dispositif de ligaturage (27) étant disposé entre les rouleaux de stockage (22, 22') et un premier poste de traitement (31, 31').

17. Dispositif selon la revendication 16, **caractérisé en ce qu'**un dispositif d'accumulation (28) est prévu en aval du dispositif de ligaturage (27).

18. Dispositif selon l'une des revendications 13 à 17, **caractérisé en ce qu'**au moins une commande des bords de bande apporte le stratifié (16) à un dispositif de découpe (71) par une ligne de guidage éclairée.

19. Dispositif selon l'une des revendications 13 à 18, **caractérisé en ce que** le laminé est découpé à une largeur de bande précise dans un mécanisme de découpe (71), les supports d'informations pouvant être placés à une distance définie du bord de la bande grâce à une ligne de guidage.

20. Dispositif selon l'une des revendications 13 à 19, **caractérisé en ce qu'**au moins deux rouleaux d'enroulement (66) destinés à enrouler en continu sont prévus et peuvent être remplacés dans une opération de remplacement à la volée.

21. Dispositif selon la revendication 13, **caractérisé en ce que** l'angle d'enroulement d'un cylindre (38, 58) du premier et du deuxième poste de traitement (31, 51) peut être réglé par l'agencement des cylindres de guidage (42, 62).

22. Dispositif selon la revendication 13, **caractérisé en ce que** les cylindres (38, 58) du premier et du deuxième poste de traitement (31, 51) sont entraînés en commun.

23. Dispositif selon la revendication 13, **caractérisé en ce que** le cylindre (38) du premier poste de traitement (31) fonctionne en glissement, le cylindre (58) du deuxième poste de traitement (51) étant entraîné.

24. Dispositif selon la revendication 13, **caractérisé en ce que** les sens de rotation des cylindres (38, 58) du premier et du deuxième poste de traitement (31, 51) sont opposés l'un à l'autre.
